# EUROPÄISCHE PATENTSCHRIFT

(11) **EP 3 560 020 B1**
(45) Veröffentlichungstag und Bekanntmachung des Hinweises auf die Patenterteilung: **14.07.2021**
(21) Anmeldenummer: 17836042.6
(22) Anmeldetag: 19.12.2017
(51) Int. Cl.: H01M 8/1018, H01M 8/0221, H01M 8/0226, H01M 8/0254

(54) **VERFAHREN ZUM FERTIGEN EINER SEPARATORPLATTE FÜR EINE BRENNSTOFFZELLE, SEPARATORPLATTE UND ZWISCHENPRODUKT FÜR EINE SEPARATORPLATTE**
METHOD OF MANUFACTURING A SEPARATOR PLATE FOR A FUEL CELL, SEPARATOR PLATE AND INTERMEDIATE PRODUCT FOR A SEPARATOR PLATE
MÉTHODE DE PRÉPARATION D'UNE PLAQUE DE SÉPARATION POUR UNE PILE À COMBUSTIBLE, PLAQUE DE SÉPARATION ET PRODUIT INTERMÉDIAIRE POUR LA PLAQUE DE SÉPARATION.

(30) Priorität: 22.12.2016 DE 102016015318
(43) Veröffentlichungstag der Anmeldung: 30.10.2019
(73) Patentinhaber: Daimler AG, 70372 Stuttgart (DE); Karl Wörwag Lack- Und Farbenfabrik GmbH & Co. KG, 70435 Stuttgart (DE)
(72) Erfinder: ULLMANN, Falk, 73257 Koengen (DE); WARTA, Helge, 71254 Ditzingen (DE)
(74) Vertreter: Dr. Weitzel & Partner
(86) Internationale Anmeldenummer: PCT/IB2017/001586
(87) Internationale Veröffentlichungsnummer: WO 2018/115952

(56) Entgegenhaltungen:
- EP-A1- 0 949 704
- EP-A1- 1 826 848
- WO-A1-2005/117165
- DE-A1- 10 130 347
- US-A1- 2010 291 465
- US-A1- 2015 236 366

## Beschreibung

Die Erfindung betrifft ein Verfahren zum Fertigen einer Separatorplatte für eine Brennstoffzelle.

Der prinzipielle Aufbau einer Polymer-Elektrolyt-Membran-Brennstoffzelle - kurz PEMFC - ist wie folgt. Die PEMFC enthält eine Membran-Elektroden-Anordnung - kurz MEA, die aus einer Anode, einer Kathode und einer dazwischen angeordneten Polymer-Elektrolyt-Membran (auch lonomer-Membran) - kurz PEM - aufgebaut ist. Die MEA ist ihrerseits wiederum zwischen zwei Separatorplatten angeordnet, wobei eine Separatorplatte Kanäle für die Verteilung von Brennstoff aufweist und die andere Separatorplatte Kanäle für die Verteilung von Oxidationsmittel und wobei die Kanäle der MEA zugewandt sind. Die Kanäle bilden eine Kanalstruktur, ein sogenanntes Flow Field oder Strömungsfeld. Die Elektroden, Anode und Kathode, können insbesondere als Gasdiffusionselektroden - kurz GDE - ausgebildet sein. Diese haben die Funktion, den bei der elektrochemischen Reaktion (zum Beispiel 2 H₂ + O₂ → 2 H₂O) erzeugten Strom abzuleiten und die Reaktionsstoffe, Edukte und Produkte, durchdiffundieren zu lassen. Eine GDE besteht aus wenigstens einer Gasdiffusionsschicht beziehungsweise Gasdiffusionslage - kurz GDL - und einer Katalysatorschicht, die der PEM zugewandt ist und an der die elektrochemische Reaktion abläuft. Die GDE kann ferner noch eine Gasverteilungslage aufweisen, die sich der Gasdiffusionslage anschließt und die in der PEMFC einer Separatorplatte zugewandt ist. Gasdiffusionslage und Gasverteilungslage unterscheiden sich vor allem in ihren Porengrößen und damit in der Art des Transportmechanismus für einen Reaktionsstoff (Diffusion beziehungsweise Verteilung). Ist die Katalysatorschicht hingegen nicht auf die Gasdiffusionslage, sondern auf eine oder beide Hauptoberflächen der PEM aufgebracht, so wird im Allgemeinen von einer Catalyst Coated Membrane - kurz CCM - gesprochen.

Eine derartige Brennstoffzelle kann bei relativ geringen Betriebstemperaturen elektrischen Strom mit hoher Leistung erzeugen. Reale Brennstoffzellen sind meist zu so genannten Brennstoffzellenstapeln - kurz Stacks - gestapelt, um eine hohe Leistungsabgabe zu erzielen, wobei anstelle der monopolaren Separatorplatten bipolare Separatorplatten, so genannte Bipolarplatten, eingesetzt werden und monopolare Separatorplatten nur die beiden endständigen Abschlüsse des Stacks bilden. Sie werden zum Teil Endplatten genannt und können sich baulich erheblich von den Bipolarplatten unterscheiden.

Die Bipolarplatten sind im Allgemeinen aus zwei Teilplatten zusammengesetzt. Diese Teilplatten weisen im Wesentlichen komplementäre und bezüglich einer Spiegelebene spiegelbildliche Formen auf. Die Teilplatten müssen aber nicht zwingend spiegelbildlich sein. Wichtig ist lediglich, dass sie zumindest eine gemeinsame Berührungsfläche aufweisen, an der sie verbunden werden können. Die Teilplatten weisen eine unebene Topographie auf. Hierdurch entstehen an den jeweils voneinander weg weisenden Oberflächen der Teilplatten die vorstehend bereits erwähnten Kanalstrukturen. An den jeweils aufeinander zuweisenden Oberflächen der Teilplatten besteht zum Beispiel bei geprägten metallischen Teilplatten die zur oben genannten Kanalstruktur komplementäre Kanalstruktur. Beim Aufeinanderlegen der beiden Teilplatten entsteht dadurch zwischen den Teilplatten, auf deren zueinander hin weisenden Oberflächen, ein Hohlraum, welcher aus einem System mehrerer miteinander verbundener Tunnels besteht. Der Hohlraum beziehungsweise das System der Tunnels ist durch eine im Wesentlichen die Teilplatten im Randbereich umlaufende Fügung flüssigkeitsdicht umrandet, wobei Öffnungen zur Kühlmittelzufuhr und -abfuhr vorgesehen sind, sodass der Hohlraum für die Verteilung eines Kühlmittels genutzt werden kann.

Somit gehört zu den Aufgaben einer Bipolarplatte: Die Verteilung von Oxidationsmittel und von Reduktionsmittel; die Verteilung von Kühlmittel und somit die Kühlung (besser gesagt Temperierung) der Brennstoffzellen; die fluidische Trennung der Einzelzellen eines Stacks voneinander; ferner die elektrische Kontaktierung der hintereinander geschalteten Einzelzellen eines Stacks und somit die Durchleitung des von den Einzelzellen erzeugten elektrischen Stroms.

Separatorplatten beziehungsweise Bipolarplatten trennen demnach in Brennstoffzellenstapeln die Reaktanden oder Reaktionsgase und das Kühlmittel voneinander ab, und sie verteilen die Reaktanden und das Kühlmittel in den Brennstoffzellenreaktionsbereich. Hierbei ist es erforderlich, dass die Separatorplatten elektrisch und thermisch gut leitfähig sowie robust gegenüber chemischen Einflüssen in der Brennstoffzelle sind. Des Weiteren sollten die Separatorplatten eine ausreichend hohe mechanische Stabilität besitzen, damit sie den mechanischen Anpressdrücken im Brennstoffzellenstapel standhalten können. Um die gasförmigen und/oder flüssigen Reaktanden beziehungsweise Medien zu den einzelnen Brennstoffzellen zu leiten, sind meist Strukturen für eine entsprechende Medienzufuhr sowie für die Medienableitung direkt in die Separatorplatten integriert.

Die Bipolarplatten sind sehr kostenintensive Bauteile und machen beim gegenwärtigen Stand der Fertigungstechnik zwischen 30 Prozent bis 45 Prozent der Kosten des Brennstoffzellenstapels aus. Die Gründe hierfür liegen insbesondere in der Anforderung an das Bereitstellen einer mit feinen Nutstrukturen versehenen Oberfläche bei einer gleichzeitig möglichst geringen Wandstärke beziehungsweise Restwandstärke.

Als Materialien für Bipolarplatten kommen Metalle in Betracht wie etwa Edelstahl oder Titan beziehungsweise Titanlegierungen. Des Weiteren umfassen Materialien für Bipolarplatten nichtmetallische Werkstoffe wie Graphit, Duroplast-Verbundwerkstoffe oder Thermoplast-Verbundwerkstoffe sowie expandierte Graphitfolien.

Bipolarplatten aus einem Kunststoffmaterial, welches mit Ruß als Füllstoff versehen ist, sind jedoch spröde und teuer in der Fertigung. Des Weiteren sind auch metallische Bipolarplatten teuer.

Die WO 2005/117165 A1 beschreibt eine Separatorplatte, die aus einem Gemisch eines Kunststoffs und elektrisch leitenden Füllstoffen als Grundmaterial besteht. Dieses beispielsweise extrudierte Grundmaterial wird dann erwärmt um es bearbeitbar zu machen. In das so vorbereitet Material werden Strömungskanäle eingeprägt und die Oberfläche der Separatorplatte wird dann zusätzlich zu den elektrisch leitenden Füllstoffen elektrisch leitfähig beschichtet, beispielsweise durch einzelne Partikel oder eine elektrisch leitfähiges Netz.

Eine Separatorplatte die aus einem UV-härtenden Kunststoff-Graphit-Gemisch besteht ist in der US 2010/291465 A1 beschreiben. Das Gemisch wird auf einem Substrat über mehrere UV-Bestrahlungen mit jeweils verschiedenen Masken ausgehärtet, um so die gewünschte Geometrie zu erreichen.

Aus der US2015/0236366 A1 ist eine weitere Separatorplatte aus Kunststoff bekannt. Ein in einer Form ausgehärter Grundkörpers der Separatorplatte wird dazu durch Gleichstromsputtern mit einer elektrisch leitfähigen Oberflächenschicht versehen.

Die EP 0 949 704 A1 und die EP 1 826 848 A1 offenbaren jeweils Separatorplatte, die im Spritzgußverfahren hergestellt werden. Sie bestehen aus einer Mischung von Kunststoff und Graphit.

Die DE 101 30 347 A1 beschreibt eine Separatorplatte, die aus einem Gemisch von Graphit und einem aushärtbaren Material, wie z.B. Phenol, besteht. Sie wird durch heißpressen in einer Form hergestellt.

Aufgabe der vorliegenden Erfindung ist es daher, ein besonders einfaches und kostengünstiges Verfahren der eingangs genannten Art zu schaffen.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Fertigen einer Separatorplatte für eine Brennstoffzelle wird auf ein Trägermaterial ein aushärtbares und elektrisch leitfähiges Material aufgebracht. In dem aushärtbaren Material wird ein Strömungsfeld für einen der Brennstoffzelle zuführbaren Reaktanden ausgebildet. Im Anschluss an das Ausbilden des Strömungsfelds wird das Material ausgehärtet. Durch das ausgehärtete Material kann die Separatorplatte gebildet werden.

Bei einem derartigen Fertigungsverfahren kann man sich die Erkenntnisse zunutze machen, welche aus der an sich bekannten und beispielsweise in der DE 10 2007 058 714 A1 beschriebenen Herstellung einer sogenannten Transferlackfolie gewonnen werden konnten. Dementsprechend lässt sich die Separatorplatte besonders einfach und kostengünstig fertigen, indem das zum Bilden der Separatorplatte nutzbare, aushärtbare Material auf dem Trägermaterial bereitgestellt wird. Es ist also ein hochproduktives Fertigungsverfahren mit besonders geringen Kosten erreichbar.

Des Weiteren sind die Rohstoffkosten zum Bereitstellen des aushärtbaren und elektrisch leitfähigen Materials besonders gering, insbesondere geringer als die Kosten zum Bereitstellen von Material für herkömmliche Separatorplatten oder Bipolarplatten. Auch dies ist einer besonders kostengünstigen Fertigung zuträglich. Ein derartiges Fertigungsverfahren lässt sich zudem leicht so skalieren, dass sehr hohe Stückzahlen bei der Fertigung der Separatorplatten erreicht werden können.

Darüber hinaus lassen sich Separatorplatten mit einer besonders geringen Dicke beziehungsweise Wandstärke bereitstellen. In einem Brennstoffzellenstapel mit einer gegebenen Größe lässt sich somit die Anzahl der Brennstoffzellen erhöhen. Dementsprechend lässt sich ein Brennstoffzellenstapel mit einer erhöhten Energiedichte bereitstellen.

Des Weiteren kommt es zu keiner Korrosion, wie sie bei metallischen Separatorplatten beziehungsweise Bipolarplatten im Betrieb der Brennstoffzellen auftreten kann. Folglich lässt sich eine besonders lange Lebensdauer der Brennstoffzellen erreichen. Darüber hinaus lassen sich die Eigenschaften des aushärtbaren und elektrisch leitfähigen Materials besonders einfach so einstellen, dass die gefertigte Separatorplatte nicht spröde ist. Auch dies ist einer verlängerten Haltbarkeit der Separatorplatte zuträglich.

Insbesondere die Nutzung von bei der Herstellung der sogenannten Transferlackfolie gewonnenen Erkenntnissen ist für die Fertigung der Separatorplatte vorteilhaft. Eine solche Transferlackfolie kommt beispielsweise als witterungsbeständige und gegenüber UV-Licht beständige Dekorfolie für Kraftfahrzeugbauteile zum Einsatz. Beispielsweise können am Seitenrand einer Frontscheibe eines Kraftfahrzeugs angeordnete Wasserabweiser mit einer derartigen Transferlackfolie versehen sein.

Die Grundlage der Lackfolientechnologie ist in der Regel ein einschichtiges oder zweischichtiges System. Auf das Trägermaterial kann zur Herstellung eines zweischichtigen Systems beispielsweise eine Haftschicht auf Wasserbasis aufgebracht werden, welche mit Pigmenten versehen sein kann. Auf der Haftschicht kann eine zweite, lösemittelhaltige Schicht, beispielsweise auf Acrylatbasis, angeordnet werden, welche insbesondere durch Strahlung wie UV-Licht und/oder Erwärmung ausgehärtet werden kann. Eine solche, das Trägermaterial und eine oder mehrere darauf aufgebrachte Lackschichten umfassende Transferlackfolie wird bevorzugt in einem Bandbeschichtungsprozess hergestellt.

Hierfür wird zunächst in einem ersten Beschichtungsgang die Haftschicht beziehungsweise der Haftlack, welcher in einem gewünschten Farbton pigmentiert ist, auf das Trägermaterial, insbesondere eine Trägerfolie, aufgetragen, von welchem sich der Haftlack später wieder ablösen lässt. Die Trägerfolie mit dem Haftlack kann gegebenenfalls aufgewickelt und zwischengelagert werden. In einem zweiten Verfahrensgang kann sie beispielsweise mit einem lösemittelhaltigen, strahlenhärtbaren Acrylat-Klarlackmaterial versehen werden, welches auf die Haftschicht aufgebracht wird. Dieser Klarlack wird getrocknet und anschließend bevorzugt mit UV-Licht oder mittels Teilchenstrahlung in Sekundenschnelle gehärtet. Auf den Klarlack kann zudem eine Schutzfolie aufgebracht werden.

Die mit der Schutzfolie versehene Transferlackfolie kann dann zum Beschichten des Kraftfahrzeugbauteils verwendet werden. Insbesondere kann hierbei die Transferlackfolie als Rollenware bereitgestellt werden und eine sogenannte Mutterrolle darstellen. Diese Rollenware kann für die Weiterverarbeitung auf unterschiedliche Maße zugeschnitten werden. Beispielsweise kann ein metallisches Bauteil wie beispielsweise ein Aluminiumband mit extrudiertem PVC (Polyvinylchlorid) versehen werden. Von der Transferlackfolie mit der Schutzfolie wird dann die Schutzfolie abgezogen. Die auf diese Weise freigelegte Oberfläche der Transferlackfolie kann dann auf das extrudierte PVC-Material aufgebracht werden. Dementsprechend befinden sich dann die auf die Trägerfolie aufgebrachten Lackschichten zwischen der PVC-Lage und der Trägerfolie, wobei die PVC-Lage auf dem metallischen Bauteil angeordnet ist. Die Trägerfolie kann dann abgezogen werden, wobei die Lackschichten auf der PVC-Lage verbleiben. Im Ergebnis werden die Lackschichten so auf das mit extrudiertem PVC versehene Aluminiumband transferiert.

Wird nun wie vorliegend die Separatorplatte nach Art einer solchen Transferlackfolie gefertigt, so lassen sich die chemischen und physikalischen Eigenschaften des die Separatorplatte bildenden Materials einfach einstellen. Zudem lassen sich die gewünschte Schichtdicke und auch eine gewünschte Oberflächenstruktur, insbesondere in Form des Strömungsfelds, im Fertigungsprozess definiert einstellen.

In der Regel ist es für die vorliegende Erfindung ausreichend, auf das Trägermaterial eine Schicht aus dem aushärtbaren Material aufzubringen. Ein zweischichtiges System (wie oben beschrieben) ist im Rahmen der vorliegenden Erfindung bevorzugt nicht erforderlich.

Vorzugsweise durchläuft das mit dem aushärtbaren Material versehene Trägermaterial eine Mehrzahl von Bearbeitungsstationen. So kann an einer Bearbeitungsstation das Strömungsfeld ausgebildet werden und an einer weiteren Bearbeitungsstation das Material ausgehärtet werden. Insbesondere lässt sich so eine sehr wirtschaftliche Endlosfertigung der Separatorplatten erreichen. Das Material kann insbesondere durch Beaufschlagen mit Strahlung, beispielsweise mit Elektronenstrahlung oder mit UV-Licht, ausgehärtet werden. Dadurch lässt sich das Aushärten besonders rasch realisieren. Auch ein thermisches Aushärten ist möglich. Gegebenenfalls kann, beispielsweise bei Verwendung von Dual-Cure-Lacken, eine sequentielle Härtung mittels Wärme und Strahlung vorgesehen sein. Ein Dual-Cure-Lack umfasst mindestens eine Komponente, die thermisch härtbar ist, und mindestens eine weitere Komponente, die mittels Strahlung, insbesondere mittels UV-Strahlung, härtbar ist. Beispielsweise kann ein Dual-Cure-Lack ein Urethanacrylatharz, das über Hydroxy- oder Isocyanatreste thermisch vernetzen kann und über Acrylreste radikalisch vernetzen kann, umfassen.

Als weiter vorteilhaft hat es sich gezeigt, wenn das Material vor dem Einbringen des Strömungsfelds zumindest bereichsweise getrocknet und/oder geliert wird. Bei einem solchen Gelieren liegt dementsprechend das Material in einem gelartigen Zwischenzustand vor, welcher zum Ausbilden des Strömungsfelds in dem Material geeignet ist. Zum Trocknen kann das Material mit Wärme beaufschlagt werden. Insbesondere kann das Material durch die Beaufschlagung mit Strahlung wie UV-Licht oder thermisch vorgehärtet beziehungsweise teilweise ausgehärtet werden, sodass sich anschließend besonders gut Strukturelemente oder Strukturen wie das Strömungsfeld in das Material einbringen lassen.

Insbesondere kann auch vorgesehen sein, das Material in einem Schritt unter Gelierung thermisch zu härten und in einem weiteren, späteren Schritt mittels Strahlung, insbesondere mittels UV-Strahlung, zu härten. Hierzu kann insbesondere der erwähnte Dual-Cure-Lack eingesetzt werden. Nach der thermischen Härtung können in einen solchen Lack noch problemlos Strukturen wie das Strömungsfeld durch plastische Verformung eingebracht werden. Eine abschließende Verfestigung, nach der das Einbringen von Strukturen durch eine plastische Verformung kaum noch möglich ist, kann dann durch Bestrahlung des Lacks bewirkt werden.

Vorzugsweise wird das Strömungsfeld mittels eines Prägewerkzeugs und/oder durch Rollformen in dem Material ausgebildet. So lässt sich das Strömungsfeld besonders präzise und reproduzierbar bereitstellen. Insbesondere beim Rollformen oder Rollprofilieren kann zudem das Trägermaterial fortlaufend die dem Ausbilden des Strömungsfelds dienende Bearbeitungsstation durchlaufen. Beim Verwenden eines Prägewerkzeugs zum Ausbilden des Strömungsfelds ist es demgegenüber einfacher, während der Ausbildung des Strömungsfelds das Trägermaterial nicht in eine Förderrichtung weiter zu bewegen.

Vorzugsweise wird zum Bereitstellen des ausgehärteten Materials ein Gemisch verwendet, welches wenigstens einen mit elektrisch leitenden Füllstoff versehenen Kunststoff und ein Lösemittel umfasst. Insbesondere können als der wenigstens eine Kunststoff ein Epoxidharz und/oder ein Acrylharz und/oder ein Polyurethanharz und/oder ein Polyesteracrylatharz zum Einsatz kommen. Des Weiteren kann das Gemisch wenigstens einen Photoinitiator aufweisen, sodass sich das Material besonders leicht mittels Licht, insbesondere UV-Licht, aushärten lässt. Die Verarbeitbarkeit des Materials kann durch eine entsprechende Einstellung des Lösemittelanteils und des Feststoffanteils sichergestellt werden. Weiterhin kann das Gemisch auch einen Härter umfassen, beispielsweise im Falle des Polyurethanharzes einen Isocyanathärter.

Als Kunststoff kann aber auch der Dual-Cure-Lack eingesetzt werden, beispielsweise ein Dual-Cure-Lack auf Basis des erwähnten Urethanacrylatharzes.

Bei dem Lösemittel handelt es sich hierbei bevorzugt um ein organisches Lösemittel oder Lösemittelgemisch, beispielsweise Butylacetat. Grundsätzlich ist es allerdings auch möglich, als Kunststoff ein wasserbasiertes Harz, beispielsweise ein wasserbasiertes Polyurethanharz, einzusetzen.

Des Weiteren wird der Kunststoff bevorzugt mit ausreichend elektrisch leitenden Füllstoffen wie etwa Ruß und/oder Graphit versehen, insbesondere in einer Menge, sodass sich ein elektrischer Widerstand des Materials in einem Bereich von etwa 10 mOhm/cm² bis etwa 30 mOhm/cm² ergibt. Durch Verwendung eines derartigen Gemisches lässt sich besonders einfach die Separatorplatte aus dem ausgehärteten Material bereitstellen. Das Gemisch kann auch weitere Füllstoffe enthalten.

In einer bevorzugten Ausführungsform umfasst das Gemisch als elektrisch leitenden Füllstoff ein kohlenstoffbasiertes Material aus der Gruppe mit Aktivkohle (AC), Aktivkohlefaser (AFC), Kohlenstoff-Aerogel, Graphit, Graphen und Kohlenstoffnanoröhrchen (CNTs).

Bei Aktivkohle handelt es sich bekanntlich um eine poröse, besonders feinkörnige Kohlenstoffmodifikation mit großer innerer Oberfläche.

Aktivkohlefasern können aus Aktivkohle gewonnen werden. Sie sind ebenfalls porös, weisen eine große innere Oberfläche auf und haben meist einen typischen Durchmesser von etwa 10 µm. Neben einer hohen spezifischen Kapazität weisen Aktivkohlefasern eine außerordentlich gute elektrische Leitfähigkeit entlang der Faserachse auf.

Kohlenstoff-Aerogel ist ein synthetisches, hochporöses Material aus einem organischen Gel, in dem die flüssige Komponente des Gels durch Pyrolyse mit einem Gas ersetzt wurde. Kohlenstoff-Aerogele können beispielsweise durch Pyrolyse von Resorcin-Formaldehyd hergestellt werden. Sie weisen eine bessere elektrische Leitfähigkeit auf als Aktivkohle.

Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome sp2-hybridisiert sind. Graphen bietet die theoretisch größte mit Kohlenstoff erreichbare Oberfläche pro Gewichtseinheit.

Bei Kohlenstoffnanoröhrchen handelt es sich um zu zylindrischen Nanoröhren umgeformte Graphenschichten. Es gibt einwandige Nanoröhren und mehrwandige Nanoröhren, bei denen mehrere einwandige Nanoröhren koaxial ineinander verschachtelt angeordnet sind.

Selbstverständlich können die genannten kohlenstoffbasierten Materialien auch in Kombination miteinander verwendet werden. Hierbei ist jedes Mischungsverhältnis denkbar. In einer besonders bevorzugten Ausführungsform umfasst das Gemisch als elektrisch leitenden Füllstoff das Graphen.

Es hat sich gezeigt, dass insbesondere bei Verwendung von Graphen als elektrisch leitenden Füllstoff eine unerwartet geringe Menge des Füllstoffs für die Herstellung der Separatorplatten ausreichend ist. Der Anteil an Graphen in dem Gemisch liegt bevorzugt im Bereich von 3 Gew.-% bis 10 Gew.-%.

In einer besonders bevorzugten Ausführungsform umfasst das Gemisch die folgenden Komponenten in den folgenden Anteilen:
- den elektrisch leitenden Füllstoff, insbesondere das Graphen, in einem Anteil von 3 Gew.-% bis 30 Gew.-%, bevorzugt von 3 Gew.-% bis 20 Gew.-%, besonders bevorzugt von 3 Gew.-% bis 10 Gew.-%
- den Kunststoff, insbesondere das Urethanacrylatharz, in einem Anteil von 40 Gew.-% bis 97 Gew.-%
- Gegebenenfalls mindestens ein Additiv zur Beeinflussung der Verarbeitungseigenschaften des Gemischs oder der Eigenschaften der zu fertigenden Separatorplatte in einem Anteil von 0,1 Gew.-% bis 10 Gew.-%

In den lösemittelhaltigen Varianten umfasst das Gemisch zudem das Lösemittel oder Lösemittelgemisch in einem Anteil von 10 Gew.-% bis 50 Gew.-%, bevorzugt von 10 Gew.-% bis 30 Gew.-%.

Es ist in allen Varianten bevorzugt, dass sich die Gewichtsanteile der Komponenten des Gemischs auf 100 Gew.-% aufsummieren.

Als Additiv können dem Gemisch beispielsweise Photoinitiatoren, Entschäumer und Verlaufmittel zugesetzt werden.

Zusätzlich oder alternativ hat es sich als vorteilhaft gezeigt, wenn als das Trägermaterial eine Folie verwendet wird. Bevorzugt besteht die Folie im Wesentlichen aus Kunststoff, insbesondere aus Fluorpolymeren wie Ethylen-Tetrafluorethylen (ETFE), Polyethylenterephthalat, Polyolefin, Polycarbonat, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/ Polycarbonat (ASA/PC), Polyacrylat, Polystyrol, Polycarbonat/Polybutylenterephthalat (PC/PBT) und /oder Polymethylmethacrylat.

Insbesondere kann als das Trägermaterial eine Polyesterfolie zum Einsatz kommen, bevorzugt eine biaxial orientierte beziehungsweise biaxial gereckte Polyesterfolie. Beispielsweise kann eine PET-Folie (PET = Polyethylenterephthalat) verwendet werden, welche unter der Bezeichnung "Mylar A" vom Hersteller DuPont erhältlich ist. Ein derartiges Trägermaterial eignet sich gut zum Aufbringen des aushärtbaren Materials und ist insbesondere für das Durchlaufen von mehreren Bearbeitungsstationen bei der Herstellung der Separatorplatte aufgrund seiner hohen Zugfestigkeit geeignet.

Vorzugsweise wird das Trägermaterial als durchgängige Materialbahn bereitgestellt, wobei zum Herstellen der Separatorplatte wenigstens ein Bereich aus dem mit dem ausgehärteten Material versehenen Trägermaterial herausgetrennt wird. So können in dem die Separatorplatte bildenden Material einfach die Öffnungen oder Durchlässe vorgesehen werden, welche als Brennstoffeinlass, Brennstoffauslass, Oxidationsmitteleinlass, Oxidationsmittelauslass sowie Kühlmitteleinlass und Kühlmittelauslass dienen. Des Weiteren lässt sich beispielsweise eine gewünschte Außenkontur der Separatorplatte vorgeben. Das Heraustrennen kann durch Stanzen und/oder Schneiden, insbesondere Laserschneiden, und dergleichen erfolgen.

Vorzugsweise wird das ausgehärtete Material in einer Dicke von etwa 50 µm bis 150 µm auf dem Trägermaterial bereitgestellt. Insbesondere wenn das ausgehärtete Material eine Dicke von 100 µm und weniger, beispielsweise etwa 90 µm, 80 µm, 70 µm, 60 µm oder 50 µm aufweist, lässt sich ein sehr vorteilhaftes Verhältnis einer Dicke des Materials zu einer Höhe beziehungsweise Tiefe von Nuten oder dergleichen Strukturen einstellen, welche das Strömungsfeld bilden. Zudem führt eine geringe Dicke des ausgehärteten Materials zu einer Verminderung der bereitzustellenden Materialmenge. Darüber hinaus lässt sich eine Zeit zum Trocknen und/oder Aushärten des Materials besonders weitgehend reduzieren.

Es ist bevorzugt, dass das ausgehärtete Material keine thermoplastischen Eigenschaften mehr aufweist, also eine reversible plastische Verformung unter Erwärmung des ausgehärteten Materials nicht mehr möglich ist.

Zum Bereitstellen der Separatorplatte wird vorzugsweise das ausgehärtete Material von dem Trägermaterial gelöst. Insbesondere kann auf diese Weise eine Teilplatte bereitgestellt werden, welche durch Verbinden mit einer weiteren Teilplatte die Separatorplatte oder Bipolarplatte bilden kann. Dementsprechend kann der zwischen den Teilplatten vorgesehene Hohlraum ein Kühlmittel-Strömungsfeld bilden. Durch das Ablösen des ausgehärteten Materials von dem Trägermaterial kann auf besonders einfache Weise sichergestellt werden, dass die Separatorplatte elektrisch leitfähig ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: schematisch eine Fertigungsanlage zum Fertigen von Bipolarplatten für Brennstoffzellen eines Brennstoffzellenstapels; und
- Fig. 2: eine vergrößerte Draufsicht auf eine gefertigte Bipolarplatte.

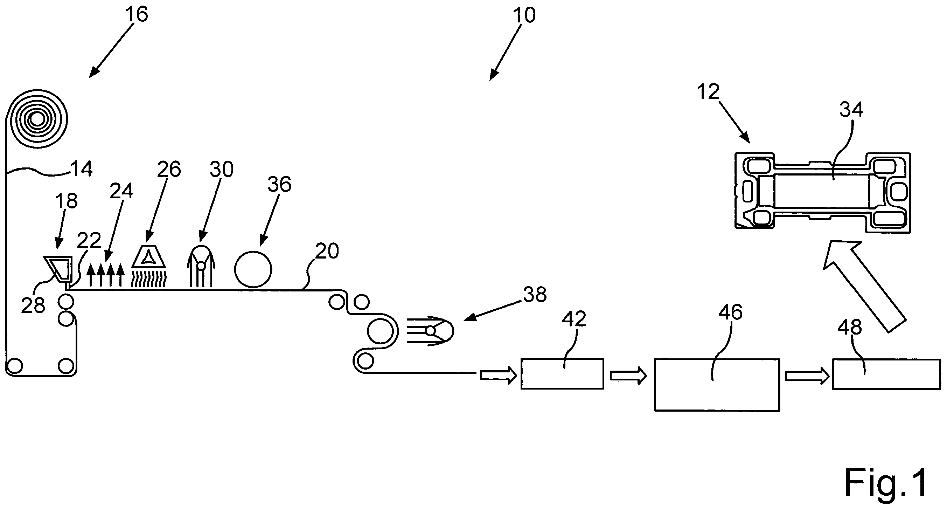

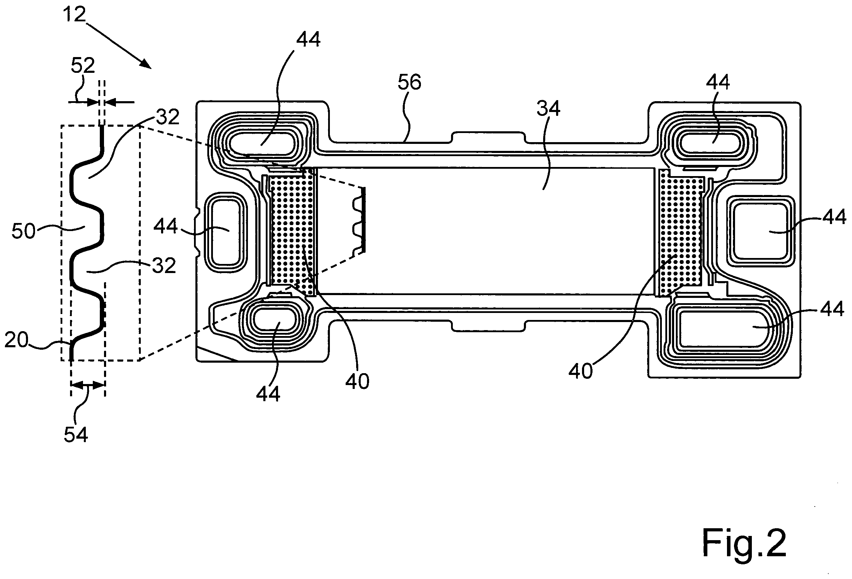

Eine in Fig. 1 schematisch gezeigte Fertigungsanlage 10 dient der Herstellung von Separatorplatten, wobei eine bipolare Separatorplatte in Form einer Bipolarplatte 12 in Fig. 2 in einer Draufsicht gezeigt ist, welche in der Fertigungsanlage 10 hergestellt werden kann. Die Bipolarplatten 12 sind für Brennstoffzellen eines Brennstoffzellenstapels vorgesehen, wie er etwa in einem Kraftfahrzeug zum Einsatz kommen kann.

Bei der Fertigung der Bipolarplatten 12 wird zunächst ein Trägermaterial vorliegend in Form einer Trägerfolie 14 bereitgestellt. Hierbei kann die Trägerfolie 14 auf einer Rolle 16 aufgewickelt vorliegen. Als Trägerfolie 14 kann insbesondere eine biaxial gereckte beziehungsweise biaxial orientierte Polyesterfolie zum Einsatz kommen.

Von der Rolle 16 wird die Trägerfolie 14 abgewickelt und nachfolgend weiteren Bearbeitungsstationen der Fertigungsanlage 10 zugeführt. An einer ersten Bearbeitungsstation 18 wird auf die Trägerfolie 14 ein Gemisch 28 aufgebracht, welches ein elektrisch leitfähiges Material 20 umfasst, wobei das Material 20 ausgehärtet werden kann. Beispielsweise kann die Trägerfolie 14 über eine Schlitzdüse 22 oder dergleichen Aufbringungsvorrichtung mit dem Gemisch 28 beaufschlagt werden, welches ein Epoxidharz und/oder Acrylharz, wenigstens ein Lösemittel, Photoinitiatoren und elektrisch leitfähige Füllstoffe wie etwa Ruß und/oder Graphit umfasst. Darüber hinaus kann das Gemisch 28 auch weitere Füllstoffe aufweisen. An einer nachfolgenden Bearbeitungsstation 24 erfolgt ein Ablüften des Lösungsmittels aus dem Gemisch 28. Dadurch verändert sich die Konsistenz des Materials 20. Das Ablüften kann beispielsweise über etwa eine Minute hinweg durchgeführt werden.

In besonders bevorzugten Ausführungsformen kann an Stelle des Gemischs mit dem Epoxidharz und/oder dem Acrylharz auch ein Gemisch aus den folgenden Komponenten als Gemisch 28 verwendet werden:
- 9,4 Gew.-% eines doppelbindungshaltigen Polyols (lösemittelfrei) mit einem OH-Gehalt von 5,7 % und einer Doppelbindungsdichte von 3,5 mol/kg
- 28,2 Gew.-% eines doppelbindungshaltigen Urethanacrylats (lösemittelfrei) mit einem NCO-Gehalt von 5,4 % und einer Doppelbindungsdichte von 1,5 mol/kg
- 28,2 Gew.-% eines doppelbindungshaltigen Urethanacrylats (lösemittelfrei) mit einer Glasübergangstemperatur von 2 °C (bestimmt mittels Dynamischer Differenzkalometrie bei einer Aufheizrate von 10 °C/min) und einer Doppelbindungsdichte von 4 mol/kg
- 1,4 Gew.-% eines handelsüblichen Photoinitiators
- 0,5 Gew.-% eines handelsüblichen Verlaufmittels
- 1,0 Gew.-% eines handelsüblichen Entschäumers
- 25.3 Gew.-% Butylacetat
- 6 Gew.-% Graphen.

Beispielsweise mittels einer Heizeinrichtung 26 wird anschließend das Gemisch 28 beziehungsweise Material 20 vorgetrocknet, welches auf die Trägerfolie 14 aufgebracht ist. Das Beaufschlagen des Gemisches 28 mit Wärme an der Heizeinrichtung 26 führt vorliegend zu einem Gelieren oder Angelieren des Gemisches 28 beziehungsweise des Materials 20. An einer nachfolgenden, optionalen Bearbeitungsstation 30 kann zusätzlich das Material 20 teilausgehärtet beziehungsweise vorgehärtet werden. Hierfür kann an der Bearbeitungsstation 30 das Material 20 mit Licht, insbesondere mit UV-Licht, beaufschlagt werden.

Anschließend werden in das angelierte beziehungsweise teilausgehärtete Material 20 Strukturen eingebracht, etwa in Form von Kanälen 32 (vergleiche Fig. 2), welche in der fertigen Bipolarplatte 12 ein Strömungsfeld 34 bilden. Durch eine entsprechende Einstellung des Anteils des Lösemittels und der Festkörper an dem Gemisch 28 kann erreicht werden, dass sich in dem vorgetrockneten beziehungsweise angelierten und/oder durch UV-Licht an der Bearbeitungsstation 30 teilausgehärteten Material 20 gewünschte Oberflächenstrukturen ausbilden lassen.

Zum Ausbilden der das Strömungsfeld 34 umfassenden Oberflächenstrukturen der Bipolarplatte 12 kann als Werkzeug 36 beispielsweise ein, insbesondere zweiteiliges, Prägewerkzeug zum Einsatz kommen. Zusätzlich oder alternativ kann dieses Strukturieren durch ein zum Rollformen oder Rollprofilieren geeignetes Werkzeug 36 vorgenommen werden. Insbesondere können auf diese Weise die Kanäle 32 beziehungsweise Nutstrukturen in dem Material 20 ausgebildet werden.

Das mittels des entsprechenden Werkzeugs 36 ausgebildete Strömungsfeld 34 (vergleiche Fig. 2) ermöglicht das Beaufschlagen einer (nicht gezeigten) Membran-Elektroden-Anordnung der Brennstoffzelle mit einem Reaktanden, beispielsweise mit Wasserstoff als Brennstoff beziehungsweise mit Sauerstoff oder Luft als Oxidationsmittel. An Oberflächenstrukturen lassen sich mittels des Werkzeugs 36 des Weiteren Strukturelemente bereitstellen, welche in der Bipolarplatte 12 in einem jeweiligen Übergangsbereich 40 zwischen dem Strömungsfeld 34 und entsprechenden Einlässen beziehungsweise Auslässen für die an der Brennstoffzellenreaktion beteiligten Reaktanden vorgesehen sind (vergleiche Fig. 2).

Aufgrund des Vorsehens der Photoinitiatoren in dem Gemisch 28 kann in einem nachfolgenden Bearbeitungsschritt das Material 20 vollständig ausgehärtet werden. Hierfür ist an einer weiteren Bearbeitungsstation eine entsprechende Lichtquelle 38, insbesondere UV-Lichtquelle, vorgesehen. Nach dem Aushärten des Materials 20 etwa mittels des von der Lichtquelle 38 abgegebenen UV-Lichts sind die entsprechenden Strukturen dauerhaft in dem Material 20 ausgebildet.

In einem nachfolgenden Bearbeitungsschritt kann beispielsweise durch Stanzen 42 eine Mehrzahl von Durchlässen 44 in dem Material 20 ausgebildet werden (vergleiche Fig. 2). Durch derartige Durchlässe 44 sind üblicherweise ein Brennstoffeinlass und ein Brennstoffauslass, ein Oxidationsmitteleinlass und ein Oxidationsmittelauslass sowie ein Kühlmitteleinlass und ein Kühlmittelauslass bereitgestellt. In den aufeinander gestapelten Brennstoffzellen bilden diese Durchlässe 44 entsprechende Kanäle zum Zuführen und Abführen der Reaktanden beziehungsweise des Kühlmittels.

Durch Zuschneiden 46 kann in einem nachfolgenden Bearbeitungsschritt beziehungsweise an einer nachfolgenden Bearbeitungsstation eine Außenkontur 56 der Bipolarplatte 12 wie gewünscht hergestellt werden. Für das Zuschneiden 46 kann insbesondere ein Laser oder dergleichen zum Einsatz kommen. Des Weiteren können mittels eines Lasers aus dem ausgehärteten Material 20 Bereiche abgetragen werden, um gewünschte Strukturen in der Bipolarplatte 12 auszubilden.

Das Material 20 ist im Übrigen durch ein geeignetes Fügeverfahren, insbesondere durch Kleben, mit einem weiteren wie vorstehend beschrieben aus dem Material 20 gebildeten Teil verbindbar. Dementsprechend kann durch das Material 20 eine erste Teilplatte der Bipolarplatte 12 bereitgestellt werden, welche durch Fügen 48 mit einer zweiten Teilplatte der Bipolarplatte 12 verbunden werden kann. Auf diese Weise lässt sich in einem Hohlraum oder Zwischenraum 50 zwischen zwei solchen Teilplatten (vergleiche Fig. 2) ein Strömungsfeld für ein Kühlmittel bereitstellen. Vorzugsweise ist eine Dicke 52 des ausgehärteten Materials 20 (vergleiche Fig. 2) sehr gering. Insbesondere ist die Dicke 52 bevorzugt deutlich geringer als eine Tiefe 54 der Nuten beziehungsweise Kanäle 32, welche in dem Bereich des Strömungsfelds 34 für den Reaktanden beziehungsweise in dem Bereich des Strömungsfelds für das Kühlmittel ausgebildet sind.

Des Weiteren ist das Material 20 dicht gegenüber Luft beziehungsweise Sauerstoff und gegenüber Wasserstoff. Darüber hinaus weist das Material 20 eine ausreichende mechanische Festigkeit und Strukturintegrität für die Bereitstellung der Bipolarplatten 12 auf, welche in den Brennstoffzellen des Brennstoffzellenstapels zum Einsatz kommen sollen. Der elektrische Widerstand ist durch geeignete Füllstoffe wie etwa die Rußpartikel beziehungsweise Graphitpartikel so eingestellt, dass das Material 20 eine gute elektrische Leitfähigkeit aufweist. Beispielsweise kann der elektrische Widerstand des Materials 20 im Bereich von 10 mOhm/cm² bis 30 mOhm/cm² liegen.

Die mit dem ausgehärteten Material 20 versehene Trägerfolie 14 kann auch zunächst als Zwischenprodukt beziehungsweise Halbzeug bereitgestellt werden, bevor durch entsprechende weitere Bearbeitungsschritte wie etwa das Stanzen 42, das Zuschneiden 46 beziehungsweise das Fügen 48 der Bipolarplatte 12 ihre endgültige Gestalt verliehen wird. Das Zwischenprodukt kann insbesondere zu einer Rolle aufgewickelt werden.

Des Weiteren kann vorgesehen sein, dass aus der mit dem ausgehärteten Material 20 versehenen Trägerfolie 14 Bereiche wie etwa die Durchlässe 44 herausgetrennt werden, und so ein die Trägerfolie 14 mit dem ausgehärteten Material 20 umfassendes Zwischenprodukt beziehungsweise Halbzeug bereitgestellt und insbesondere zu einer Rolle aufgewickelt wird. Aus einem solchen Zwischenprodukt kann dann durch das Zuschneiden 46 und das Fügen 48 nach einem Ablösen des Materials 20 von der Trägerfolie 14 die Bipolarplatte 12 mit der gewünschten Außenkontur 56 gebildet werden. Insbesondere kann zunächst das Zwischenprodukt zugeschnitten und nach dem Ablösen des Materials 20 von der Trägerfolie 14 durch Fügen der so erhaltenen Teilplatten die Bipolarplatte 12 ausgebildet werden.

## Patentansprüche

1. Verfahren zum Fertigen einer Separatorplatte (12) für eine Brennstoffzelle, bei dem an einer ersten Bearbeitungsstation (18) auf ein Trägermaterial (14) ein aushärtbares und elektrisch leitfähiges Material (20) aufgebracht wird, wobei in dem Material (20) ein Strömungsfeld (34) für einen der Brennstoffzelle zuführbaren Reaktanden ausgebildet wird, und wobei das Material (20) im Anschluss an das Ausbilden des Strömungsfelds (34) ausgehärtet wird,
**dadurch gekennzeichnet, dass**
- das mit dem aushärtbaren und elektrisch leitfähigen Material (20) versehene Trägermaterial (14) eine Mehrzahl von Bearbeitungsstationen (24, 26, 30) durchläuft, dass
- das Material (20) vor dem Einbringen des Strömungsfelds (34) an der jeweiligen Bearbeitungsstation (24, 26, 30) zumindest bereichsweise getrocknet und/oder geliert und/oder vorgehärtet wird, und dass
- das Strömungsfeld (34) anschließend mittels eines Prägewerkzeugs und/oder durch Rollformen in dem Material (20) ausgebildet wird, wobei zum Bereitstellen des ausgehärteten Materials (20) ein wenigstens einen mit einem elektrisch leitenden Füllstoff versehenen Kunststoff und ein Lösemittel umfassendes Gemisch (28) verwendet wird.

2. Verfahren nach Anspruch 1,
**dadurch gekennzeichnet, dass**
das Material (20) durch Beaufschlagen mit UV-Licht aushärtbar ist.

3. Verfahren nach einem der Ansprüche 1 bis 2,
**dadurch gekennzeichnet, dass**
das Material (20) durch Beaufschlagen mit UV-Licht vorgehärtet wird.

4. Verfahren nach einem der Ansprüche 1 bis 3,
**dadurch gekennzeichnet, dass**
zum Bereitstellen des ausgehärteten Materials (20) ein wenigstens ein mit einem elektrisch leitenden Füllstoff versehenes Epoxidharz und/oder Acrylharz und ein Lösemittel umfassendes, wenigstens einen Photoinitiator aufweisendes, Gemisch (28) verwendet wird.

5. Verfahren nach einem der Ansprüche 1 bis 3,
**dadurch gekennzeichnet, dass**
als das Trägermaterial (14) eine Folie, insbesondere eine bevorzugt biaxial orientierte Polyesterfolie, verwendet wird.

6. Verfahren nach Anspruch 4,
**dadurch gekennzeichnet, dass**
das Gemisch (28) den elektrisch leitenden Füllstoff, bevorzugt Graphen, in einem Anteil von 3 Gew.-% bis 30 Gew.-% umfasst, bevorzugt von 3 Gew.-% bis 20 Gew.-%, besonders bevorzugt von 3 Gew.-% bis 10 Gew.-%.

7. Verfahren nach einem der Ansprüche 1 bis 6,
**dadurch gekennzeichnet, dass**
das Trägermaterial (14) als durchgängige Materialbahn bereitgestellt wird, wobei zum Herstellen der Separatorplatte (12) wenigstens ein Bereich (44) aus dem mit dem ausgehärteten Material (20) versehenen Trägermaterial (14) herausgetrennt wird.

8. Verfahren nach einem der Ansprüche 1 bis 7,
**dadurch gekennzeichnet, dass**
das ausgehärtete Material (20) in einer Dicke (52) von etwa 50 µm bis etwa 150 µm auf dem Trägermaterial (14) bereitgestellt wird.

9. Verfahren nach einem der Ansprüche 1 bis 8,
**dadurch gekennzeichnet, dass**
zum Bereitstellen der Separatorplatte (12) das ausgehärtete Material (20) von dem Trägermaterial (14) gelöst wird.

## Claims

1. Method for producing a separator plate (12) for a fuel cell, in which a curable and electrically conductive material (20) is applied to a carrier material (14) at a first processing station (18), wherein a flow field (34) for a reactant which can be fed to the fuel cell is formed in the material (20), and wherein the material (20) is cured following the formation of the flow field (34),
**characterized in that**
- the carrier material (14) provided with the curable and electrically conductive material (20) passes through a plurality of processing stations (24, 26, 30), **in that**
- the material (20) is dried and/or gelled and/or pre-hardened at least in regions at the respective processing station (24, 26, 30) before the flow field (34) is introduced, and **in that**
- the flow field (34) is subsequently formed in the material (20) by means of an embossing tool and/or by roll forming, wherein a mixture (28) comprising at least one plastic provided with an electrically conductive filler and a solvent is used to provide the cured material (20).

2. Method according to claim 1, **characterized in that** the material (20) is curable by exposure to UV light.

3. Method according to one of claims 1 to 2, **characterized in that** the material (20) is precured by exposure to UV light.

4. Method according to one of claims 1 to 3, **characterized in that** a mixture (28) having at least one epoxy resin and/or acrylic resin provided with an electrically conductive filler and having a solvent and at least one photoinitiator is used to provide the cured material (20).

5. Method according to one of claims 1 to 3, **characterized in that** a film, in particular a preferably biaxially oriented polyester film, is used as the carrier material (14).

6. Method according to claim 4, **characterized in that** the mixture (28) comprises the electrically conductive filler, preferably graphene, in a proportion from 3% to 30% by weight, preferably from 3% to 20% by weight, particularly preferably from 3% to 10% by weight.

7. Method according to one of claims 1 to 6, **characterized in that** the carrier material (14) is provided as a continuous material web, wherein at least one region (44) is cut out of the carrier material (14) provided with the cured material (20) in order to produce the separator plate (12).

8. Method according to one of claims 1 to 7, **characterized in that** the cured material (20) is provided in a thickness (52) of about 50 µm to about 150 µm on the carrier material (14).

9. Method according to one of claims 1 to 8, **characterized in that** for providing the separator plate (12) the cured material (20) is detached from the carrier material (14).

## Revendications

1. Procédé de fabrication d'une plaque séparatrice (12) pour une pile à combustible, dans lequel, à un premier poste de traitement (18), un matériau (20) durcissable et électriquement conducteur est appliqué sur un matériau de support (14), un champ d'écoulement (34) pour un réactif pouvant être amené à la pile à combustible étant formé dans le matériau (20) et le matériau (20) étant durci après la formation du champ d'écoulement (34),
**caractérisé en ce que**
- le matériau de support (14) muni du matériau durcissable et électriquement conducteur (20) passe par une pluralité de postes de traitement (24, 26, 30), que
- le matériau (20) est séché et/ou gélifié et/ou prédurci au moins dans certaines zones avant la réalisation du champ d'écoulement (34) au poste de traitement respectif (24, 26, 30) et que
- le champ d'écoulement (34) est ensuite formé dans le matériau (20) au moyen d'un outil d'estampage et/ou par roulage, un mélange (28) comprenant au moins une matière plastique munie d'une substance de remplissage électriquement conductrice et un solvant étant utilisé pour mettre à disposition le matériau durci (20).

2. Procédé selon la revendication 1,
**caractérisé en ce que**
le matériau (20) est durcissable par exposition à la lumière UV.

3. Procédé selon l'une des revendications 1 à 2,
**caractérisé en ce que**
le matériau (20) est prédurci par exposition à la lumière UV.

4. Procédé selon l'une des revendications 1 à 3,
**caractérisé en ce que**
pour mettre à disposition le matériau durci (20), on utilise un mélange comprenant une résine époxy et/ou une résine acrylique munie d'au moins une substance de remplissage électriquement conductrice et un solvant, présentant au moins un photoinitiateur (28).

5. Procédé selon l'une des revendications 1 à 3,
**caractérisé en ce que**
l'on utilise comme matériau de support (14) un film, en particulier un film de polyester orienté de préférence biaxialement.

6. Procédé selon la revendication 4,
**caractérisé en ce que**
le mélange (28) comprend la substance de remplissage électriquement conductrice, de préférence du graphène, dans une proportion de 3 % à 30 % en poids, de préférence de 3 % à 20 % en poids, de manière particulièrement préférée de 3 % à 10 % en poids.

7. Procédé selon l'une des revendications 1 à 6,
**caractérisé en ce que**
le matériau de support (14) est mis à disposition sous la forme d'une bande de matériau continue, au moins une zone (44) étant séparée du matériau de support (14) muni du matériau durci (20) pour produire la plaque séparatrice (12).

8. Procédé selon l'une des revendications 1 à 7,
**caractérisé en ce que**
le matériau durci (20) est mis à disposition en une épaisseur (52) d'environ 50 µm à environ 150 µm sur le matériau de support (14).

9. Procédé selon l'une des revendications 1 à 8,
**caractérisé en ce que**
pour mettre à disposition la plaque séparatrice (12), le matériau durci (20) est détaché du matériau de support (14).
